# EUROPEAN PATENT APPLICATION

(11) **EP 1 926 040 A2**
(43) Date of publication of application: **28.05.2008**
(21) Application number: 07120922.5
(22) Date of filing: 16.11.2007
(51) Int. Cl.: G06K 19/06

(54) **Print having speech code, method and device for reappearing record, and commerce mode.**

(30) Priority: 22.11.2006 JP 2006315056
(71) Applicant: Kakumoto, Junichi, Tokushima (JP)
(72) Inventor: Kakumoto, Junichi, Hukuoka-ken (JP); Egawa, Nao, Tokushima ken (JP)
(74) Representative: Sarpi, Maurizio

(57) **Abstract**

The present invention relates to a paper medium. The paper medium can reappear speech recoding by speech compressing, error modifying, interleaving modulation, scrambling modulation to minimize area of the speech code. Furthermore, the significant words or pattern for human eyes are inserted into the insignificant speech code for human eyes. The added value can be improved by combining the space of print having speech code and the space of advertisement, and the obstacles are decreased by inserting the speech code into the paper medium.

## Description

### 1. Field of the Invention

The present invention relates to print technologies, print precisions, publication paperiness, data compressing technologies, error modifying theories, error modifying and processing technologies, technologies for reading coding of optical pattern having high precision and high speed, image scanning technologies, printer, mobile telephone, computer, and show method and speech record for print.

### 2. Description of the Related Art

Concretely, the present invention relates to print technologies having high precision, data compressing technologies having high density, digital expression error modifying and processing technologies having high efficiency, technologies for reading print pattern having high speed and high precision.

A JP Patent Application 2001-342724 relates to a system for transmitting information. A JP Patent 2001-144883 relates to a telegraph and a telegraph producing system having a speech coding function. The above Patent Applications only disclose a system, which coding speech, print and reappear the code through communication routes.

A JP Patent Application 2001-333373 relates to an electron device. A JP Patent Application H10-187409 relates to a print transferring system for speech transformation. A JP Patent Application 2005-257745 relates to an image forming device. A JP Patent Application 2001-184291 relates to a periodical publication and information source having image code. A JP Patent Application H10-326323 relates to a coding image recording device. A JP Patent Application 2000-152135 relates to a method, device and program for reappearing information. A JP Patent Applicant H9-282404 relates to a device for reappearing code. A JP Patent Applicant H8-202382 relates to a device for reappearing speech signals. A JP Patent Applicant H8-7056 relates to a drawing book having two-dimension data code. The above Patent Applications disclose a system, which print the coding speech on print medium to be reappeared, but they only generally disclose the method and they do not disclose the detailed method. The above Patent Applications do not disclose the technology for ensuring the data bulk and the precision of the print when printing the coding speech on the print medium. The printed contents after coding speech, only can be expressed into unclear message for human eyes. The above Patent Applications do not disclose the technology by means of inserting data, which is significant for the human eyes, into the unclear message codes such that the coding speech can be useful. The above Patent Applications only disclose the method for printing alone speech code and reading, but they do not disclose the print is a medium, which has economic effects. The most prints will estimate the effect per unit area. However, the above Patent Applications do not disclose how to solve the problems of printing speech code in high density on the print medium.

A JP Patent Application 2005-108200 relates to a server and a method for printing. A JP Patent Application 2005-72811 relates to an information processing method, program and device. A JP Patent Application 2003-345374 relates to a speech reappearing device. A JP Patent Application 2001-184291 relates to a periodical publication and information resource having image code. A JP Patent Application 2003-241768 relates to a transferring system, issuing device and server. The above Patent Applications use the location information of the content to reappear the speech information. The speech information is not recorded in the print medium, but in the others.

A JP Patent Application 2004-50331 relates to a method and device about of image data. The above Patent Application discloses a method, which inserts location information for reading into the print code such that the error will decreased when reading the speech code printed on the print.

A JP Patent Application 2001-130079 relates to an image recording method, device and medium. A JP Patent Application 2000-348045 relates to a print manufacturing method, device and medium. A JP Patent Application H10-78995 relates to a code recording device. A JP Patent Application H6-231466 relates to a dot coding, information reappearing system. The above Patent Applications only disclose a method for dividing magazine space when printing the speech code on the print medium.

A JP Patent Application 2002-24750 relates to a print manufacturing method, and discloses a program for printing the speech code on the print medium.

A JP Patent Application H8-314486 relates to an information processing device having a two-dimension bar-code processing function. A JP Patent Application H8-254987 relates to an information processing device having a speech information appending function. The above Patent Applications disclose the speech code and the code for expressing the location of the content.

There are also other Patent Applications for printing speech code on paper medium. However, the technology for printing speech code on paper medium only uses on teaching materials, not on common paper medium.

The conventional technologies have some following problems from technology, commerce mode and system.

The first problem is that it is hard to perform printing in high density and high precision on paper medium.

The second problem is that practicable timbre and reappearing time is a problem for must being solved since the paper is a medium for printing in bulk. If based on printing precision of the general paper medium and the minimal data bulk for processing the signals to reappear the speech about 5 seconds, the space efficiency will be a problem. Otherwise, the paper medium having speech code will be widely used if the paper medium is efficient for expressing the speech.

The third problem is that the technology has very drawbacks in commerce.

The fourth problem is that the reading reappearing device, which is indispensable element of the whole system, is not practical because of the third problem.

The fifth problem is that the provider for providing speech content and the reader for reading the speech content will not accept the system, which only has an idea, since the system is not practical.

The sixth problem is that if the speech code of the print is not the content but the storing location information of the content, the amount of the information is decreased, and the communication routes have negative characters, such as indirect operation, complex operation, repeated communication routes , non real-time, etc., The above mentioned negative facts come with many limits.

### BRIEF SUMMARY

A print in accordance with a preferred embodiment includes a first character, a second character and a third character.
inducing analog data as original data;
converting the original data into digital symbol for performing an analog-digital converting function, the digital symbol being used as symbolic original data;
decreasing a length of the symbolic original data for performing a compressing function. The compressed symbolic original data being used as compressed data;
by following error modifying demodulating step, processing an unequal tendency between probability of producing "1" and probability of producing "0" of bit data per unit area of the data to an equal tendency for performing a first random modulating function;
by following error modifying demodulating step, modulating to decrease probability of producing seriate "1" and probability of producing seriate "0" of data for performing a first interleaving modulating function;
combining at least one of the first random modulating function and the first interleaving modulating function for performing a first scrambling function, the data modulated by the first scrambling function being used as first scrambling compressed data;
by removing at least one of errors produced in a recording step and purposive incorporating errors described as claim 2 during writing to reading, converting indispensable data for removing the errors into digital data to obtain data having no errors for performing a error modifying modulating function, the compressed data converted by the error modifying modulating function or the first scrambling compressed data being used as auto-restoring compressed data;
randomizing the compressed data or the scrambling compressed data for performing a second random modulating function to avoid high probable errors of specific printing pattern produced by bugs of capability of the recording medium or the printing device produced during writing to reading;
interleaving the recording data under physical configuration of the data in the recording medium for performing a second interleaving modulating function to avoid errors produced by the bugs of capability of the recording medium or the printing device during writing to reading, or errors produced in specific locations of the recording medium by the following purposive incorporating words or pattern;
combining at least one of the second interleaving modulating function and second random modulating function for performing a scrambling auto-restoring compressing function, the data produced by the scrambling auto-restoring compressing function being used as scrambling auto-restoring compressed data;
incorporating a synchronous signal for reading the printing pattern into the scrambling auto-restoring compressed data to produce synchronous scrambling auto-restoring compressed data;
inserting purposively data having errors into pattern presented by the synchronous scrambling auto-restoring compressed data in a plane to be purposive data having errors, the synchronous scrambling auto-restoring compressed data, which having been inserted into the purposive data having errors. Being used as writing data, medium for recording the writing data being used as recording medium, and writing data arrayed in the recording medium being used as medium recording data;
reading the medium recording data from the recording medium to be used as reading data;
detecting the synchronous signal of the reading data and removing the synchronous signal from the reading data for performing a removing synchronous signal function, the data, which having been removed the synchronous signal by the removing synchronous signal function, being reappearing scrambling auto-restoring compressed data;
demodulating the reappearing scrambling auto-restoring compressed data modulated by the second interleaving modulating function for performing a second interleaving demodulating function;
demodulating the reappearing scrambling auto-restoring compressed data modulated by the second random modulating function for performing a second random demodulating function;
demodulating the reappearing scrambling auto-restoring compressed data by at least one of the second interleaving demodulating function and the second random demodulating function to reappear the auto-restoring compressed data;
demodulating the reappearing auto-restoring compressed data modulated by the error modifying modulating function for performing a error modifying demodulating function to reappear the first scrambling compressed data;
demodulating the reappeared first scrambling compressed data modulated by the first random modulating function for performing a first random demodulating function;
demodulating the reappeared first scrambling compressed data modulated by the first interleaving modulating function for performing a second interleaving demodulating function;
demodulating the reappeared first scrambling compressed data by at least one of the first random demodulating function and the first interleaving demodulating function to reappear the compressed data;
demodulating the reappeared compressed data modulated by the compressing function for performing a compressing demodulating function to reappear the original data;
the first character being that the medium recording data being modulated by at least one of the first scrambling function, the first interleaving modulating function, the second scrambling function and the second interleaving modulating function;
the second character being that the recording medium being a print;
the third character being that the medium recording data being the printed pattern.

The present invention includes a method for improving the printing code having high density and high precision.

The present invention includes a method for avoiding the inaptitude of the paper medium having specific condition of the partial concentration when printing.

The present invention includes a method for avoiding the badness of the partial print when printing the specific pattern.

The present invention includes a method for combine the insignificant speech code for human eyes and the advertisement affection by the error modifying function.

By the above methods, the obstacles can be removed. If possible, the reading reappearing function can be added into the popular mobile phone or the computer and it is important for the commerce. The need of the advertisementer from the speech code of the paper medium can accelerate the content having speech code.

Other objects, advantages and novel features of the invention will become more apparent from the following detailed description when taken in conjunction with the accompanying drawings, in which:

### BRIEF DESCRIPTION OF THE DRAWINGS

These and other features and advantages of the various embodiments disclosed herein will be better understood with respect to the following description and drawings, in which like numbers refer to like parts throughout, and in which:
FIG. 1 is a schematic view of a printing pattern in accordance with a preferred embodiment of the present invention;
FIG. 2 is a schematic, enlarged view of the printing pattern of the preferred embodiment;
FIG. 3 is a schematic, enlarged view of the printing pattern of the preferred embodiment;
FIG. 4 is a schematic view of a printing pattern in accordance with another preferred embodiment of the present invention;
FIG. 5 is a schematic, enlarged view of the printing pattern of the preferred embodiment;
FIG. 6 is a schematic, enlarged view of the printing pattern of the preferred embodiment;
FIG. 7 is a schematic view of the printing pattern of the preferred embodiment;
FIG. 8 is a schematic view of the printing pattern of the preferred embodiment;
FIG. 9 is a schematic view of the printing pattern of the preferred embodiment lacking partial functions;
FIG. 10 is a schematic, enlarged view of the specific printing pattern;
FIG. 11 is a schematic, enlarged view of the specific printing pattern when leaking ink; and
FIG. 12 is a square chart of the preferred embodiment.

### DETAILED DESCRIPTION

Reference will now be made to the drawings to describe a preferred embodiment of the present fuel tank, in detail.

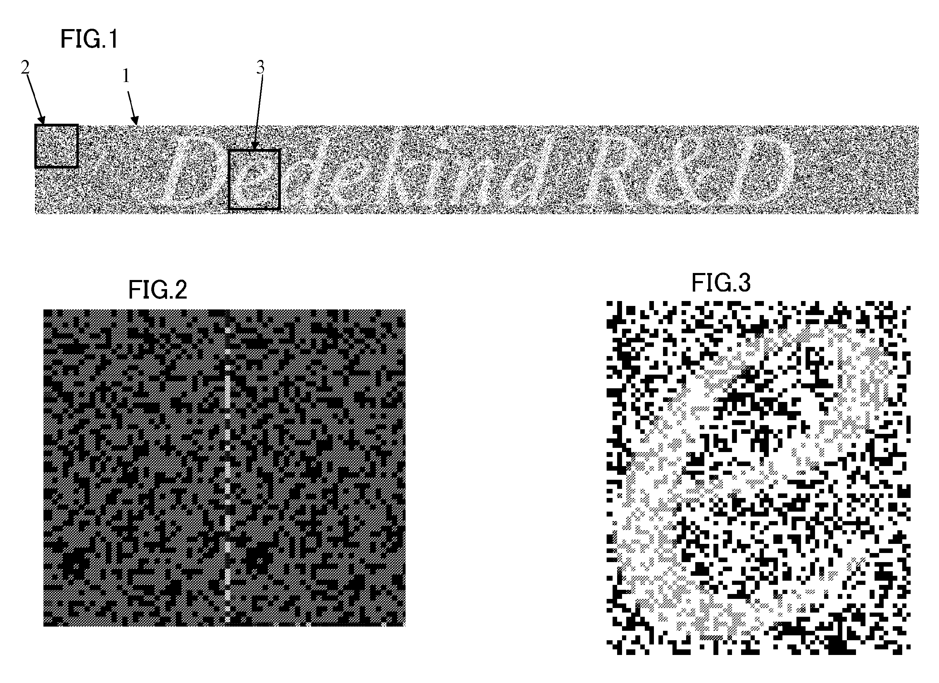

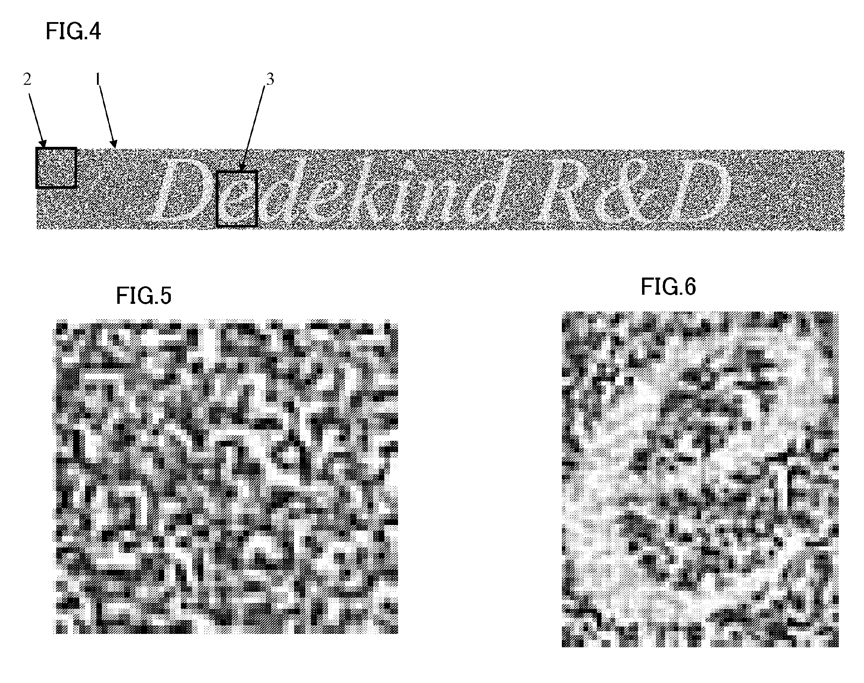

Referring to FIGS. 1 to 3, data used in a printing speech code pattern in accordance with a first preferred embodiment of the present invention is shown. In this exemplary embodiment, the data of FIG. 4 is used to be reappeared.

Referring to FIGS. 4 to 6, data of speech code pattern printed in a paper medium, which is read by an image scanner in accordance with the first preferred embodiment of the present invention is shown.

Comparing FIGS. 4 to 6 with FIGS. 1 to 3, the pattern is indistinct since the resolving power is decreased.

FIG. 1 is corresponding to FIG. 4, FIG. 2 is corresponding to FIG. 5, and FIG. 3 is corresponding to FIG. 6.

In this exemplary embodiment, a square chart for having an inserting function is shown in FIG. 12.

In FIG. 1, a coding frame 1 is a rectangle having a width of 10mm and a length of 150mm. Since the record reappearing speech has a 16 bit resolving power and a 16kHZ sampling frequency, it can be fully applied in image introduction of information, background music, music, etc.

Since there are no methods for recording the timbre itself as data, signs of S1-S6 is used to define the timbre of this exemplary embodiment of the present invention. S1 is used to define a sampling frequency, and is 16kHZ. S2 is used to define a sampling resolving power, and is 16 bit. S3 is used to define a sampling time, and is 5 seconds. S4 is used to define a compressing method, and is MP3. S5 is used to define a baud rate, and is 16kBPS. S6 is used to define a reappearing error ratio, and is 0 percent.

Signs S7 and S8 is defined to relate to the printing resolving power. S7 is used to define a occupying area of print, and is 10mm X 150mm. S8 is used to define a printing precision, and is 300DPI. In 1mmX1mm performing 11.8X11.8, that is, when printing 140 grids, grids having no ink, which are used to define "1", are surrounded by grids having ink, the ink will not infiltrate into the grids having no ink, the printing precision is that described as above.

Signs S9 to 13 is defined to relate to error modifying. S9 is used to define error modifying to transform the speech code by using a error modifying function of the repairable code having error of 12 percent. S10 is used to define a synchronous signal, which is inserted into the code. S11 relates to interleaving, that is, the data array is transformed interleavingly for corresponding concentrative errors. S12 relates to randomization, that is, the data array is transformed randomly for corresponding the increasing of the error probability of a specific pattern. S13 is prepense error data, that is, when coding, the words "Dedekind R&D" is printed to be recognized by human eyes. The words will not influence the speech code reappearing.

FIG. 1 (FIG. 4) is an enlarged-view of the printing pattern reappearing in the paper medium of the preferred embodiment of the present invention.

The coding signs transforms a printing bit image pattern by the computer, and then is printed on the paper having no excellent quality by a general printer. The reappearing is performed, the image is read by the image scanner to ensure the reappearing of the speech.

The area having concentrative grains is the speech code. The exemplary embodiment of FIG. 1 uses a general printer and paper to presume the printing precision. If using the high precision to print, the resolving power is increased such that the area having concentrative grains is seemed to be almost gray for the human eyes.

In speech code, the word "Dedekind R&D", which is significant for the human eyes, is inserted.

1 is a whole of the speech code, 2 is a partial enlarged area shown in FIG. 2 (FIG. 5), and 3 is an enlarged area shown in FIG. 3 (FIG. 6).

In practical embodiments, since the words are red, the homochromous pattern will be more vivid comparing with FIGS. Therefore, the vivid words can be used in the advertisement.

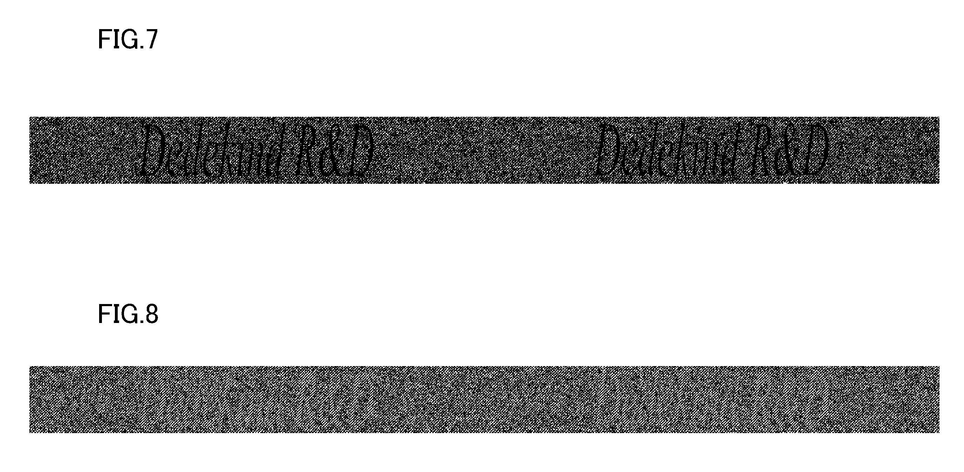

FIG. 7 uses the words daubed by a black ink as the prepense error data to insert into the synchronous scrambling compressing data, and to ensure the reappearing error ration be 0 percent. The prepense error data occupies 11 percent of the whole area. In this exemplary embodiment, since the designed limit is 12 percent, the prepense error data is adjacent to the limit.

FIG. 8 shows that vacant words as the purposive error data are insert into the synchronous scrambling auto-restoring compressed data, and the rate of the reappearing error is ensured to be 0 percent.

Referring to FIGS. 7 and 8, the error can be dispersed by the first scrambling modulating function and the second scrambling modulating function for perform the error modifying modulating function to obtain the reappearing signal, even if the synchronous scrambling auto-restoring compressed data has some bugs because of the purposive error data.

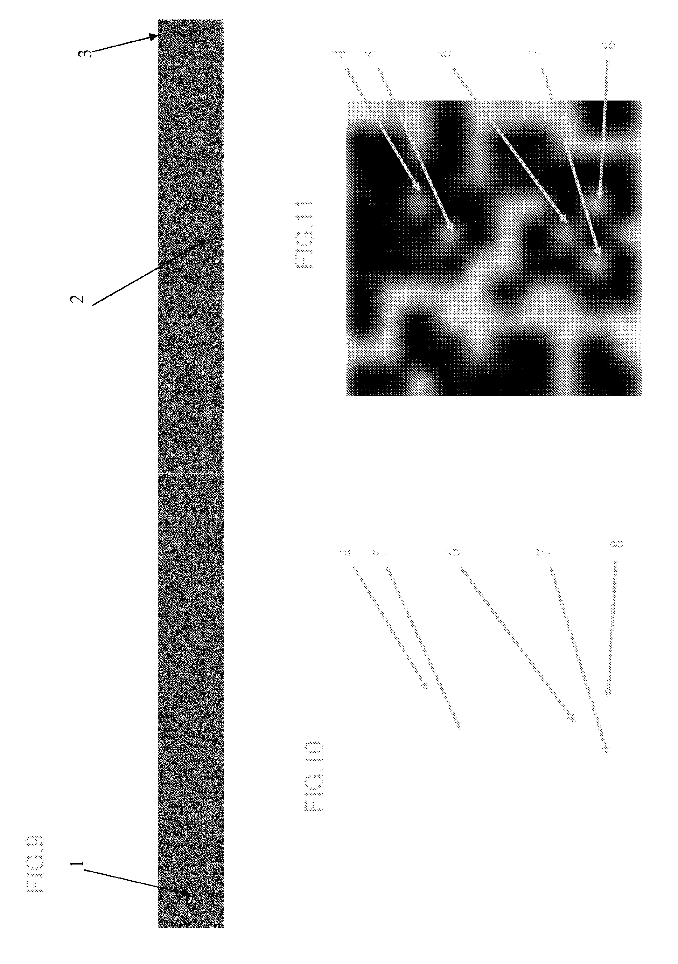

FIG. 9 is the first scrambling compressed data, which does not modulated by the first random modulating function and the first interleaving modulating function, that is, the compressed data. In this exemplary embodiment, there are 1 part of white having high density, 2 part of black having high density, and 3 part of black vertical stripe. The successful ratio of the error modifying will be decreased because of the density warp such that the scrambling modulating function is effectual. In this exemplary embodiment, the ratio of the modifying error is not improved by the first random modulating function, but the ratio of the modifying error is improved by the first interleaving modulating function.

FIG. 10 is an example, which shows the specific pattern prone to leakage ink. FIG. 4, FIG. 5, FIG. 6, FIG. 7, FIG. 8 are examples of the printing data, which has parts having no ink surrounded by the dots having ink. The vacant parts will be leakaged by the ink, which are surrounded by the parts having ink, because of the difference of the printing precision.

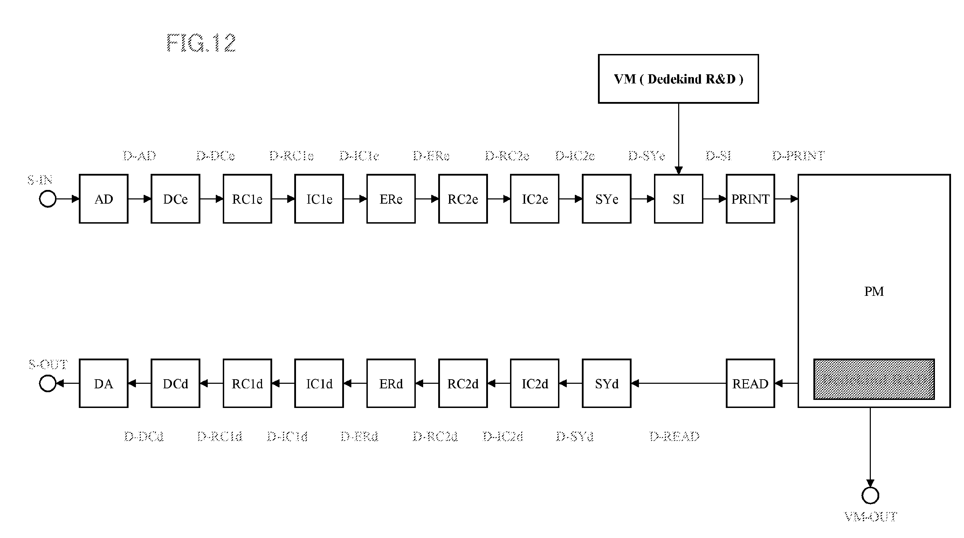

FIG. 11 shows the pattern leakaged by the ink. FIG. 4, FIG. 5, FIG. 6, FIG. 7, FIG. 8 of the FIG. 11 are be leakaged by the ink because being surrounded by the parts having ink, although they may have original white gridirons, such that the ratio of producing error will be increased greatly. The random modulating function is needed to avoid the above problem.

The random modulating function only increases the computing amount, does not increase the area of the speech code.

FIG. 12 shows a square chart of processing signals of the exemplary embodiment. S-IN is used to define an input of the speech signals, and S-OUT is used to define an output of the reappearing speech signal. AD is used to define a function for converting the analogy signals to the digital signals, and DA is used to define a function for converting the digital signals to the analogy signals. D-AD is used to define an output of AD, and S-out is used to define an output of DA. DCe is used to define the compressing function, and the DCd is used to define the decompressing function opposite to the DCe. D-DCe is an output of DCe, and D-DCd is an output of DCd. RCle is used to define the first random modulating function, and RCld is used to define the first random demodulating function. D-RCle is an output of RCle, and D-RCld is an output of RCld. In this exemplary embodiment, the first random modulating function does not improve the error modifying function. ICle is used to define the first interleaving modulating function, and ICld is used to define the first interleaving demodulating function. In this exemplary embodiment, the first interleaving modulating function is effectual. D-ICle is an output of ICle, and D-ICld is an output of ICld. ERe is used to define the error modifying modulating function, and ERd is used to define the error modifying demodulating function. D-ERe is an output of ERe, and D-ERd is an output of ERd. RC2e is used to define the second random modulating function, and RC2d is used to define the second random demodulating function. D-RC2e is an output of RC2e, and D-RC2d is an output of RC2d. IC2e is used to define the second interleaving modulating function, and IC2d is used to define the second interleaving demodulating function. D-IC2e is an output of IC2e, and D-IC2d is an output of IC2d. SYe is used to define incorporating the synchronous signals and SYd is used to define removing the synchronous signals. D-SYe is an output of SYe, and D-SYd is an output of SYd. SI is used to define a function for inserting the significant words or pattern for human eyes into the speech code, which should be reappeared, by the printing medium. VM is the purposive error data, that is, the signficative words or pattern for human eyes. Dedekind R&D is the words of the exemplary embodiment shown in FIG. 1. D-SI is an output of SI. PRINT is the printing steps. READ is a sensor for reading optically the printing code. D-PRINT is an output of PRINT, that is, the printing pattern printed in the paper medium. D-READ is an output of READ. PM is the paper medium. The grain frame of PM is the area inserting the speech code. Dedekind R&D is the signficative printing pattern for human eyes. VM-OUT is the cognizable printing pattern for human eyes.

### Detailed description of the appended claim 1

The functions described as following of the present invention are conventional arts, they are not the characters of the present invention, and are not described specifically.

Converting the analog signals into the digital signals is a conventional art.

The compressing function for the data is a conventional art. In this exemplary embodiment, MP3 is used to perform the compressing function. Other, such as AAC or OGG, can be used to compress and decompress the audio frequency and used widely. The speech of the mobile phone can be divided into the pitch and the formant to be compressed.

The random modulating function is a conventional art, and is a method using approximate random symbolic array to operate the antiforeign theory into the space data array.

The interleaving modulating function is a conventional art. In this exemplary embodiment, the interleaving modulating function is used to coordinate transform the data array.

Many methods can be used to incorporate the synchronous signals, and the many methods are all conventional arts.

Reading the synchronous signals is important for reappearing the data accurately. In this exemplary embodiment, it is arranged after the second scrambling modulating function.

The error modifying modulating function is a conventional art. In this exemplary embodiment, the method of low density parity check is used, and it is simple.

The ratio between the error percent and the successful probability of modifying error is determined by the error percent and the capability of modifying error.

The first random modulating and demodulating functions and the first interleaving modulating and demodulating functions are not essential. In this exemplary embodiment, the capability of modifying error will not change whether or not using the first random modulating and demodulating functions. Generally, the scrambling modulating function will be operated before or after modifying error, such that the range of modifying error can be enlarged.

Reading the code from the printing pattern is a conventional art.

The error modifying function will be operated when demodulating the speech code inserting the purposive error data, such that the bugs of the speech code can be bore. The above design is an essential limit. The essential limit can be performed by the error modifying modulating and demodulating function. In this exemplary embodiment, the reappearing signals can be obtained by the error modifying function even if the synchronous scrambling auto-restoring compressed data has been inserted into the purposive error data.

### Detailed description of the appended claim 2 and 3

The purposive error data is the significant words or pattern, that is, advertisements and information can be inserted therein. The added value of the area of the speech code have no signification is improved, that is, the added value of the paper medium is improved. There are two purposive error data. As described in the appended claim 2, even if the color or chroma change, the method for reading error will not be influenced. As described in the appended claim 3, if the color or chroma change, the method for reading error will be influenced.

### Detailed description of the appended claim 4 and 5

The purposive error data is a general words, and the vacant parts around the words are inserted into the synchronous scrambling auto-restoring compressed data. The print as described in the appended claim 2 and 3 is used for the advertisement. The print as described in the appended claim 4 and 5 is effectual when the content inserted into the corresponding speech.

### Detailed description of the appended claim 6

The original data are sound signals.

### Detailed description of the appended claim 7

This relates to a rule comprised by computer programs of the producing function for writing data, and a device having the rule.

### Detailed description of the appended claim 8 and 9

The present invention uses the combining of the conventional art to decrease the area of printing reappearing speech code under the condition for ensuring the reliability, and to add the value of the part areas for using the area effectively. There are different entering obstacles to the area having added value and the area having no added valve. If no obstacle, a new commerce mode would be produced. The present invention can decrease greatly the obstacles. Of course, the value corresponding to the area of the medium, has the added valve relating to the speech code and the added value of the purposive error data.

Now, the indirect methods of storing the content after reading the storing code, is normal. Compared with the conventional art, the present invention can reappear directly the content. Therefore, the present invention has a high speed, and a convenient character without limit of the time and the location. The present invention can produce new commerce mode.

### Detailed description of the appended claim 10

Since the contents are printed on the paper medium, the copyright thereof must be estimated. The speech also has copyright same as novel, essay, draw, music. Therefore, a new commerce mode is produced for the copyright of the speech. Furthermore, if the content has strong persuasion, and the need for repeating the content is increased, originators have more desires to produce the high artistic content and the specific expressing methods. The amount of the content increases greatly such that various circulations are produced.

Described as the above, the present invention uses the combining of the methods for processing signals to decrease the area for expressing the speech code and demodulating without error.

The paper medium printed the speech code can enter a new field of medium and can be performed by the technology. However, the entering obstacles have many problems if the paper medium printed the speech code are used widely in the technology.

To solve the above problems, a method is inserting the significant pattern or information for the eyes of the people into the speech code such that the added value of medium having speech code can be improved greatly.

The value of the paper medium is changed greatly for improving greatly the supply and the need. The new various competitions are produced because of the different expressing method and the persuading method of the present invention.

An advantage of the present invention is removing the entering obstacles when printing the speech code on the paper medium.

Another advantage of the present invention is bringing along the print, the advertisement agent, the advertisementer, the manufacturer for manufacturing mobile phone or computer, the manufacturer for news. The present invention also can bring along the integrated circuit, the computer controlling programs for processing the signals, the lens for reading, and the sensor.

Another advantage of the present invention is reappearing directly the information of the celebrity, the introduction of the music, the introduction of the autoptic ambience, although the speech code is not long.

Other advantage of the present invention is improving the income of the provider from the copyright.

A hand scanner function of the speech code of the printing medium can be attached on the mobile phone.

The scanners having PC interface, such as USB, are sold.

The reappearing function of the speech code can be attached on the mobile phone or computer.

The cost of the speech code of the print is determined.

The advertisement and the added information of the corresponding content are attached in the speech code.

The surrounding using the copyright is easy to be constructed because of the speech code.

The short content having wallop is printed one after the other.

The print having speech code is printed.

The printing speech code is the advertisement and the expressing form, which can be understood, for the eyes of the people.

The mobile phone has a scanning and the function for reappearing the speech code.

The scanner having the speech code is suited to the computer.

The present invention can be used in terminals converting the speech signals to the printing data, and the corresponding soft.

The present invention can be used in the print having the speech code.

The present invention can be used in the mobile phone and the soft of the computer having the speech code reappearing function.

The present invention can be used in the circulation of the speech content.

The present invention can be used in the new needs relates to the speech code of the print.

In the disclosure, the paper medium is a print medium. The prepense error data are words or picturs when representing speech codes produce error by human actions. In actual applications, the prepense error data is a message (such as, advertisement) appealing to human eyes or words daubed by the black ink. There are two methods for representing the prepense error data. One of the two methods is changing color or chroma to produce error with not influencing original codes. The interleave is a method for using a predetermined rule to act on concluded space arrangement data to change the arrangement. The randomization is a method for using predetermined random data to act on concluded data to reduce a windage tendency of original data.

The above description is given by way of example, and not limitation. Given the above disclosure, one skilled in the art could devise variations that are within the scope and spirit of the invention disclosed herein, including configurations ways of the recessed portions and materials and/or designs of the attaching structures. Further, the various features of the embodiments disclosed herein can be used alone, or in varying combinations with each other and are not intended to be limited to the specific combination described herein. Thus, the scope of the claims is not to be limited by the illustrated embodiments.

## Claims

1. A print comprising a first character, a second character and a third character, the first character, the second character and the third character comprising:
inducing analog data as original data;
converting the original data into digital symbol for performing an analog-digital converting function, the digital symbol being used as symbolic original data;
decreasing a length of the symbolic original data for performing a compressing function. The compressed symbolic original data being used as compressed data;
by following error modifying demodulating step, processing an unequal tendency between probability of producing "1" and probability of producing "0" of bit data per unit area of the data to an equal tendency for performing a first random modulating function;
by following error modifying demodulating step, modulating to decrease probability of producing seriately "1" and probability of producing seriately "0" of data for performing a first interleaving modulating function;
combining at least one of the first random modulating function and the first interleaving modulating function for performing a first scrambling function, the data modulated by the first scrambling function being used as first scrambling compressed data;
by removing at least one of errors produced in a recording step and purposive incorporating errors described as claim 2 during writing to reading, converting indispensable data for removing the errors into digital data to obtain data having no errors for performing a error modifying modulating function, the compressed data converted by the error modifying modulating function or the first scrambling compressed data being used as auto-restoring compressed data;
randomizing the compressed data or the scrambling compressed data for performing a second random modulating function to avoid high probable errors of specific printing pattern produced by bugs of capability of the recording medium or the printing device produced during writing to reading;
interleaving the recording data under physical configuration of the data in the recording medium for performing a second interleaving modulating function to avoid errors produced by the bugs of capability of the recording medium or the printing device during writing to reading, or errors produced in specific locations of the recording medium by the following purposive incorporating words or pattern;
combining at least one of the second interleaving modulating function and second random modulating function for performing a scrambling auto-restoring compressing function, the data produced by the scrambling auto-restoring compressing function being used as scrambling auto-restoring compressed data;
incorporating a synchronous signal for reading the printing pattern into the scrambling auto-restoring compressed data to produce synchronous scrambling auto-restoring compressed data;
inserting purposively data having errors into pattern presented by the synchronous scrambling auto-restoring compressed data in a plane to be purposive data having errors, the synchronous scrambling auto-restoring compressed data, which having been inserted into the purposive data having errors. Being used as writing data, medium for recording the writing data being used as recording medium, and writing data arrayed in the recording medium being used as medium recording data;
reading the medium recording data from the recording medium to be used as reading data;
detecting the synchronous signal of the reading data and removing the synchronous signal from the reading data for performing a removing synchronous signal function, the data, which having been removed the synchronous signal by the removing synchronous signal function, being reappearing scrambling auto-restoring compressed data;
demodulating the reappearing scrambling auto-restoring compressed data modulated by the second interleaving modulating function for performing a second interleaving demodulating function;
demodulating the reappearing scrambling auto-restoring compressed data modulated by the second random modulating function for performing a second random demodulating function;
demodulating the reappearing scrambling auto-restoring compressed data by at least one of the second interleaving demodulating function and the second random demodulating function to reappear the auto-restoring compressed data;
demodulating the reappearing auto-restoring compressed data modulated by the error modifying modulating function for performing a error modifying demodulating function to reappear the first scrambling compressed data;
demodulating the reappeared first scrambling compressed data modulated by the first random modulating function for performing a first random demodulating function;
demodulating the reappeared first scrambling compressed data modulated by the first interleaving modulating function for performing a second interleaving demodulating function;
demodulating the reappeared first scrambling compressed data by at least one of the first random demodulating function and the first interleaving demodulating function to reappear the compressed data;
demodulating the reappeared compressed data modulated by the compressing function for performing a compressing demodulating function to reappear the original data;
the first character being that the medium recording data being modulated by at least one of the first scrambling function, the first interleaving modulating function, the second scrambling function and the second interleaving modulating function;
the second character being that the recording medium being a print;
the third character being that the medium recording data being the printed pattern.

2. The print as claimed in claim 1, further comprising a fourth character and a fifth character, the fourth character is reading the purposive error data, which are significative words or patterns for human eyes, by the method for producing error; the fifth character is that the words or pattern of the purposive error data are served as the data having error to make color modulation and chroma modulation on the medium recording data for expressing the data having error.

3. The print as claimed in claim 1, further comprising a sixth character and a seventh character, the sixth character is reading the purposive error data, which are significative words or patterns for human eyes, by the method for not producing error; the seventh character is that the words or pattern of the purposive error data are served as the data having no error to make color modulation and chroma modulation on the medium recording data for expressing the data having no error.

4. The print as claimed in claim 2, further comprising an eighth character, the eighth character is that the data having error are parts having type ink therein of the print, other areas being printed the synchronous scrambling auto-restoring compressed data.

5. The print as claimed in claim 3, further comprising an eighth character, the eighth chatacter is that the data having no error are parts having type ink therein of the print, other areas being printed the synchronous scrambling auto-restoring compressed data.

6. The print as claimed in claim1, wherein the original data is sound data, and this is a ninth character.

7. A device having scanner, mobile phone and computer, comprising an eleventh character and a twelfth character, the eleventh is that the reappearing data is sound data; the twelfth character is reading the medium recording data of the print as claimed in claim land producing the reappearing data as claimed in claim 1.

8. A commerce mode, which publishes the print as claimed in claim 1 having words or pattern inserted into the data having error or the data having no error, determine the value corresponding to the added value of the words or pattern.

9. A commerce mode, which publishes the print as claimed in claim 1 having the synchronous scrambling auto-restoring compressed data, determine the value corresponding to the added value of the synchronous scrambling auto-restoring compressed data, which is as the original data.

10. A commerce mode, determine the value of the copyright of the original data to traffic the original data, which is the synchronous scrambling auto-restoring compressed data of the print as claimed in claim 1.
